(19) Europäisches Patentamt
European Patent Office
Office européen des brevets

(11) **EP 3 695 968 A1**

(12) **EUROPEAN PATENT APPLICATION**

(43) Date of publication:
**19.08.2020 Bulletin 2020/34**

(51) Int Cl.:
***B33Y 70/00*** *(2020.01)* ***B29C 64/40*** *(2017.01)*
***C08F 216/06*** *(2006.01)* ***C08F 218/08*** *(2006.01)*

(21) Application number: **19156861.7**

(22) Date of filing: **13.02.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Bond high performance 3D technology B.V.**
**7521 PH Enschede (NL)**

(72) Inventors:
- **Bruggeman, Adrianus**
  **7521 PH Enschede (NL)**
- **Chevtchik, Natalia Vladimirovna**
  **7521 PH Enschede (NL)**
- **Ekkelenkamp, Antonie Everhard**
  **7521 PH Enschede (NL)**
- **Helfrich, Sjoerd Pieter**
  **7521 PH Enschede (NL)**

(74) Representative: **Renkema, Jaap**
**IPecunia Patents B.V.**
**P.O. Box 593**
**6160 AN Geleen (NL)**

(54) **USE OF A COPOLYMER AS WATER SOLUBLE SUPPORT MATERIAL FOR ADDITIVE MANUFACTURING APPLICATIONS**

(57) The invention relates to the use of a copolymer containing
a. 90-99.5 mol% monomer units A
b. 0.5-10 mol% monomer units B,
wherein monomer unit A is

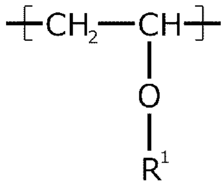

wherein monomer unit B is

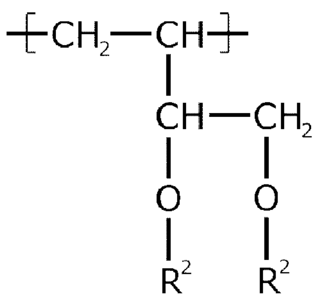

wherein $R^1$ is H or a $C_1$-$C_{10}$ alkylcarbonyl group,
wherein $R^2$ is H or a $C_1$-$C_{10}$ alkylcarbonyl group,
wherein at least 90 mol% of $R^1$ and $R^2$ are H (according to $^1$H-NMR) and
wherein the melt flow rate (MFR (2.16 kg at 230 °C)) of the copolymer is between 1-100 g/10 min as measured according

EP 3 695 968 A1

to ISO1133,
wherein the copolymer is used as water soluble support material for additive manufacturing, and wherein the mol% are determined relative to the total amount of monomer units of the copolymer.

The invention also relates to a branched copolymer comprising monomer units A and B.

## Description

The present disclosure relates to additive manufacturing systems for printing three-dimensional (3D) parts and support structures. In particular, the present disclosure relates to support materials for use in additive manufacturing systems, consumable assemblies retaining the support materials, and methods of manufacturing and using the support materials and assemblies in additive manufacturing systems to print articles.

Additive manufacturing systems are used to print or otherwise build printed parts from digital representations of the printed parts (e.g., AMF and STL format files) using one or more additive manufacturing techniques. Examples of commercially available additive manufacturing techniques include extrusion-based techniques, jetting, selective laser sintering, high speed sintering, powder/binder jetting, electron-beam melting, and stereolithographic processes. For each of these techniques, the digital representation of the printed part is initially sliced into multiple horizontal layers. For each sliced layer, a tool path is then generated, which provides instructions for the particular additive manufacturing system to print the given layer. For example, in an extrusion-based additive manufacturing system, a printed part may be printed from a digital representation of the printed part in a layer-by-layer manner by extruding a thermoplastic material. The part material is extruded through an extrusion tip carried by a print head of the system, and is deposited as a sequence of roads on a substrate in an x-y plane. The extruded part material fuses to previously deposited part material, and solidifies upon a drop in temperature. The position of the print head relative to the substrate is then incremented along a z-axis (perpendicular to the x-y plane), and the process is then repeated to form a printed part resembling the digital representation. In fabricating printed parts by depositing layers of a part material, supporting layers or structures are typically built underneath overhanging portions or in cavities of printed parts under construction, which are not supported by the part material itself. A support structure may be built utilizing the same deposition techniques by which the part material is deposited. The host computer generates additional geometry acting as a support structure for the overhanging or free-space segments of the printed part being formed. Support material is then deposited from a second nozzle pursuant to the generated geometry during the printing

process. The support material adheres to the part material during fabrication, and is removable from the completed printed part when the printing process is complete.

Water soluble support materials for additive manufacturing are known in the art. For example WO2017/112689 describes a polymeric blend of polyvinylpyrrolidone (PVP polymers. The polymeric material includes a blend of at least two PVP polymers. The support material can be thermally stable at temperatures above 80 °C, and can be disintegrated by dissolving in tap water.

US 8,772,782 describes a polyvinyl alcohol based resin composition which is water soluble and can be melt processed without suffering from coloration and has high aging stability. The use of the polyvinyl alcohol as support material in additive manufacturing is however not described.

Verbatim markets a polyvinylalcohol butenediol copolymer (BVOH) to be used as soluble support material in additive manufacturing. This material melts at a temperature of 176 °C, and has a Vicat softening temperature of 92 °C. The support material can be used below the melting temperature of 176 °C, preferably below the Vicat softening temperature of 92 °C.

Disadvantages of the known water soluble polymer materials is application at too low temperatures for certain high temperature additive manufacturing materials such as PEEK, PEI and others.

There is a need for support materials that can withstand temperatures up to 200 °C, preferably even higher and can still be dissolved or at least solubilized to be easily removed with water.

The invention relates to the use of a copolymer containing

a. 90-99.5 mol% monomer units A
b. 0.5-10 mol% monomer units B,

wherein monomer unit A is

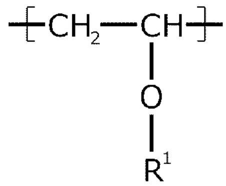

wherein monomer unit B is

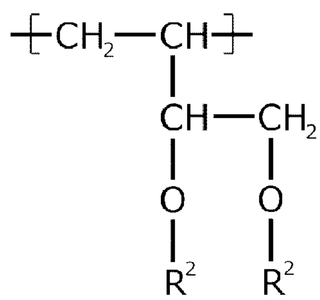

wherein $R^1$ is H or a $C_1$-$C_{10}$ alkylcarbonyl group,
wherein $R^2$ is H or a $C_1$-$C_{10}$ alkylcarbonyl group,
wherein at least 90 mol% of $R^1$ and $R^2$ are H (according to $^1$H-NMR),
wherein the melt flow rate (MFR (2.16 kg at 230 °C)) of the copolymer is between 1-100 g/10 min as measured according to ISO1133,
wherein the copolymer is used as water soluble support material for additive manufacturing, and wherein the mol% are determined relative to the total amount of monomer units of the copolymer.

In a preferred embodiment the copolymer is partly branched having G'> G" at angular frequencies of 0.1 and 10 rad/s, wherein G' is the storage shear modulus of the copolymer and G" is the loss shear modulus of the copolymer.

The copolymer has the advantage of being stable when printed as a support structure to temperatures up to 230 °C, which allows printing at very high temperatures. The support structure comprising the copolymer can be easily dissolved in water at a temperature between 20 and 80 °C, preferably in an ultrasonic bath.

<u>Detailed description.</u>

The invention relates to the use of a copolymer containing

a. 90-99.5 mol% monomer units A
b. 0.5-10 mol% monomer units B,

wherein monomer unit A is

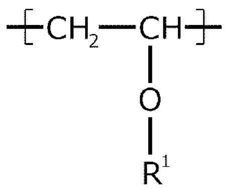

wherein monomer unit B is

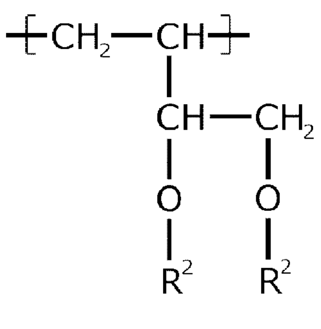

,

wherein $R^1$ is H or a $C_1$-$C_{10}$ alkylcarbonyl group, wherein $R^2$ is H or a $C_1$-$C_{10}$ alkylcarbonyl group, wherein the copolymer is used as water soluble support material in additive manufacturing, preferably fused deposition modeling (FDM).

An alkyl carbonyl group is a (-(C=O)-alkyl) group, wherein the group is bound through the carbonyl group to the oxygen pending the main chain of the copolymer. The oxygen atom pending the mainchain of the polymer and carbonyl group of the substituent $R^1$ or $R^2$ form together an ester group. $C_1$-$C_{10}$ defines the number of C-atoms of the alkyl group of the alkylcarbonyl group. When the alkyl group is a $C_1$ group, the alkyl carbonyl-group is known as an acetyl-group.

Monomer unit A is preferably is a vinylacetate group or a vinylalcohol group. This means that $R^1$ can be partly an acetyl group and partly H. Preferably at least 90 mol% of $R^1$ is H, more preferably at least 98 mol% of $R^1$ is H, more preferably at least 99 mol% of $R^1$ is H, most preferably at least 99.5 mol% of $R^1$ is H.

Monomer unit B is preferably a 1,2-butenyl-3,4-diacetyl or 1,2-butenyl-3,4-dihydroxy group. Preferably at least 90 % of monomer units B are 1,2-butenyl-3,4-dihydroxy moieties, and less than 10% 1,2-dibutenyl-3,4-diacetyl moieties.

Preferably at least 90 mol% of $R^2$ is H, more preferably at least 98 mol% of $R^2$ is H, more preferably at least 99 mol% of $R^2$ is H, most preferably at least 99.5 mol% of $R^2$ is H.

The melt flow rate (MFR (2.16 kg at 230 °C)) of the copolymer is between 1-100 g/10 min as measured according to ISO1133. Preferably the melt flow rate ranges between 5 and 80 g/10 min.

The copolymer has preferably a complex viscosity at 0.1 rad/s between 20 and 50 kPa.s and between 0.5 and 5 kPa.s at 10 rad/s, as measured on an Anton Paar UDS200 rheometer fitted with a MP306 spindle and a TEK350 plate, with a gap of 1 mm, at a temperature of 220 °C.

Preferably the copolymer has between 96 and 99 mol% of monomer units A and between 1 and 4 mol% monomer units B.

The copolymer has preferably a melting temperature of at least 200 °C, preferably at least 210°C, more preferably at least 220 °C, as determined according to DSC (10 K/min heating rate).

Preferably the copolymer can be used at operating temperatures of at least 175 °C, for example between 175 and 235 °C, more preferably between 185 and 230 °C. The copolymer can make a support structure which is stable under these conditions (high temperature) and can be easily removed by dissolution in water at ambient temperature. The operating temperature is the temperature of the build chamber of an additive manufacturing system at the position of the part which is being printed. Preferably the additive manufacturing method is fused deposition modeling (FDM). Preferably the copolymer is used in the additive manufacturing of high temperature materials such as PEEK, PEI, Polyphtalamide, Polyphenylene sulfone, Polyether sulfone, Polysulfone, Polytetrafluorethylene, Polyamide imide, Polybenzoimidazole, liquid crystalline polymers, and similar polymer materials with a processing temperature of at least 250°C.

In a preferred embodiment the copolymer is partly branched or crosslinked, by an aging process at elevated temperature, to increase stability of the copolymer against high temperatures and to increase the high temperature performance of the copolymer, while maintaining the solubility in water.

These branched polymers are not known in the art, and therefore the invention also relates to the branched copolymer containing

a. 90-99.5 mol% monomer units A
b. 0.5-10 mol% monomer units B,

wherein monomer unit A is

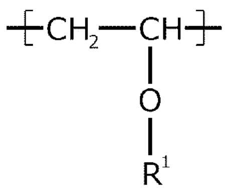

wherein monomer unit B is

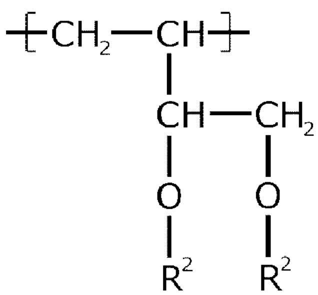

,

wherein $R^1$ is H or a $C_1$-$C_{10}$ alkylcarbonyl group,
wherein $R^2$ is H or a $C_1$-$C_{10}$ alkylcarbonyl group,
wherein the branched copolymer has a storage shear modulus G' and a loss shear modulus G", wherein G' and G" are at least 10 kPa at angular frequencies of 0.1 rad/s,
wherein G' and G" are at least 80 kPa at an angular frequency of 10 rad/s, and
wherein the G' and G" are determined on an Anton Paar UDS200 rheometer fitted with a MP306 spindle and a TEK350 plate, with a gap of 1 mm, at a temperature of 220 °C.

Preferably the storage shear modulus G' is between 12-30 kPa at an angular frequency of 0.1 rad/s, and between 100-200 kPa at an angular frequency of 10 rad/s.

Preferably the loss shear modulus G" is between 12-30 kPa at an angular frequency of 0.1 rad/s, and between 100-200 kPa at an angular frequency of 10 rad/s.

The branched copolymer has preferably a complex viscosity at 0.1 rad/s between 100 and 300 kPa.s and between 10 and 40 kPa.s at 10 rad/s, as measured on an Anton Paar UDS200 rheometer fitted with a MP306 spindle and a TEK350 plate, with a gap of 1 mm, at a temperature of 220 °C.

For not-crosslinked or unbranched copolymers, the storage shear modulus G' is higher than the loss shear modulus G" at an angular frequency of 0.1 rad/sec. At higher angular frequencies, this order can be reversed, such that the loss shear modulus G' is higher than the storage shear modulus G" at 10 rad/s. For not-crosslinked systems a crossover point is present between 0.1 rad/s and 10 rad/s, which can be however absent in the branched copolymer used in a preferred embodiment of the present invention.

Despite the crosslinking or branching, the polymers are still largely soluble in water and can be easily removed when part of an object made by additive manufacturing. At least 95 wt% of the copolymer is easily dissolved, preferably at least 98 wt%, or 99 wt% of the copolymer.

In the branched copolymer, monomer unit A is preferably a vinylacetate group or a vinylalcohol group. This means that $R^1$ can be partly an acetyl group and partly H. Preferably at least 90 mol% of $R^1$ is H, more preferably at least 98 mol% of $R^1$ is H, more preferably at least 99 mol% of $R^1$ is H, most preferably at least 99.5 mol% of $R^1$ is H.

In the branched copolymer, monomer unit B is preferably a 1,2-butenyl-3,4-diacetyl or 1,2-butenyl-3,4-dihydroxy group. Preferably at least 90 % of monomer units B are 1,2-butenyl-3,4-dihydroxy moieties, and less than 10% 1,2-dibutenyl-3,4-diacetyl moieties. Preferably at least 90 mol% of $R^2$ is H, more preferably at least 98 mol% of $R^2$ is H, more preferably at least 99 mol% of $R^2$ is H, most preferably at least 99.5 mol% of $R^2$ is H.

The measured complex viscosity ($\eta^*$, as defined below wherein G', G" and $\omega$ represent the storage shear modulus, loss shear modulus and angular frequency, respectively), of the cured material shows a dramatic increase when compared to the uncured material. Measured complex viscosities at 0.1 rad/s were between 23 and 29 kPa·s for the uncrosslinked material versus 190 and 240 kPa·s, for the crosslinked material. At 10 rad/s complex viscosities between 1.1 and 1.4 kPa·s for the uncrosslinked material versus 16 and 20 kPa·s, for the crosslinked material.

$$\eta^* = \frac{\sqrt{\left(G'^2 + G''^2\right)}}{\omega}$$

Preferably the branched copolymer has between 96 and 99 mol% of monomer units A and between 1 and 4 mol% monomer units B.

The branched copolymer has preferably a melting temperature of at least 210 °C, preferably at least 215, more preferably at least 220 °C, as determined according to DSC (10 K/min heating rate).

The invention also relates to a process for making the copolymer according to the invention.

The process comprises the steps of providing a copolymer as disclosed in US 8,722,782, which is hereby incorporated by reference.

The production method of such a PVOH-based resin is not particularly limited but includes, for example, a method of saponification of a copolymerization product obtained by copolymerizing a vinyl ester-based monomer and 3,4-diol-1,2-butene or an ester thereof. Incidentally, two or more kinds of vinyl ester-based monomer and two or more kinds of esters of 3,4-diol-1,2-butene may be copolymerized.

Examples of the vinyl ester-based monomer for use in the production of the PVOH-based resin include vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate, vinyl versatate, and vinyl trifluoroacetate. Among these, in view of profitability, vinyl
acetate is preferably used to provide monomer unit A.

Examples of the compounds giving monomer units B include 3,4-dihydroxy-1-butene, 3,4-diacyloxy-1-butene, 3-acyloxy-4-hydroxy-1-butene, 4-acyloxy-3-hydroxy-1-butene, 3,4-diacyloxy-2-methyl-1-butene, 4,5-dihydroxy-1-pentene, 4,5-diacyloxy-1-pentene, 4.5-dihydroxy-3-methyl 1-pentene, 4.5-diacyloxy-3-methyl-1-pentene, 5,6-dihydroxy-1-hexene, 5,6-diacyloxy-1-hexene, and glycerin monoallyl ether or any acetylated forms of the mentioned monomers. Among these, from the standpoint that copolymerization reactivity and industrial handleability are excellent, 3,4-diacyloxy-1-butene is more preferably used.

The copolymerization product obtained by copolymerization is then preferably saponified. This saponification can be performed by dissolving the obtained copolymerization product in an alcohol or anhydrous alcohol and using an alkali catalyst or an acid catalyst. Examples of the alcohol include methanol, ethanol, propanol, tert-butanol, and mixed solvent such as methanol/methyl acetate and methanol/benzene, and above all, methanol is preferably used. The concentration of the copolymerization product in the alcohol is appropriately selected according to the viscosity of the system but is usually selected from the range of 10 to 60 mass %. The catalyst used for saponification includes an alkali catalyst such as alkaline metal hydroxide or alcoholate (e.g., sodium hydroxide, potassium hydroxide, sodium methylate, sodium ethylate, potassium methylate, lithium methylate), and an acid catalyst such as sulfuric acid, hydrochloric acid, nitric acid, metasulfonic acid, zeolite and cation-exchange resin.

Examples of the apparatus used for such a saponification reaction include a kneader, a belt-like continuous saponification apparatus, and a twin-screw extruder.

The resulting copolymer can be subsequently heated, preferably in an inert atmosphere, at a temperature between 180 and 220 °C for a period between 0.5 and 3 hours, to partially crosslink and obtain the branched copolymer according to the present invention.

Figures

Figure 1a shows plots of the storage and loss moduli (G' and G", respectively) versus the shearing rate of uncured BVOH.

Figure 1b shows plots of the storage and loss moduli (G' and G", respectively) versus the shearing rate of BVOH cured for 1 hour under vacuum at 200°C.

Figure 2 shows complex viscosity of uncured BVOH and BVOH cured for 1 hour under vacuum at 200°C plotted versus the shearing rate.

Figure 3a shows storage shear modulus plotted versus the shearing rate of uncured BVOH and of BVOH cured for 1 hour under vacuum at 200°C.

Figure 3b shows loss shear modulus plotted versus the shearing rate of uncured BVOH and of BVOH cured for 1 hour under vacuum at 200°C.

Figure 4 shows cross-sections of the printed structures, which were photographed as they were oriented on the build plate.

## Examples 1 Materials & Methods

### 1.1 Curing procedure

Materials:

Vacuum bagging film (PA232, Diatex), sealant tape (SM5126, Diatex) and a self-cutting vacuum plug (Diatex) were ordered at Advanced Plastics, Zeewolde (NL)

Methods:

From vacuum bagging film and sealant tape, a vacuum bag was fabricated in which compression molded BVOH 8211P rods for a custom FDM set-up were placed. Using a self-cutting vacuum plug, air was removed from the bag with a vacuum sealer appratus and the vacuum plug was subsequently sealed. The bag containing the rods was placed in a 200°C pre-heated oven for 1 hour. After which the bag was removed and was left to cool to room temperature.

### 1.2 Melt rheology in shear mode

On an Anton Paar UDS200 rheometer fitted with a MP306 spindle and a TEK350 plate, with a gap of 1 mm. Before measuring the material granulate was allowed to melt completely on the plate. The measurements were performed just above the melting temperature, as determined by DSC. A frequency sweep between 100 and 0.01 rad/s was performed at 220°C to determine the shear-moduli (G' and G") and complex viscosity of the material.

### 1.3 Determination of improved heat stability

Test samples were printed on a custom-built 3D printing setup with the build plate set to 200°C. The nozzle

temperature was set to 220°C. Samples were print in the form of cylinders with an inner diameter of 28.5 mm of 3 layers thick and 10 layers high with a brim with an inner diameter 24 mm of 1 layer thick and 10 layers wide. The used line height and line width were 0.2 and 0.75 mm, respectively.

1.4 Solubility of printed material

The solubility of the printed cylinders was evaluated by weighing each sample and placing them separately in tap water in a Kemet12 ultrasonic water bath at 80°C under constant sonication until the samples were completely dissolved.

$^1$H-NMR method.

$^1$H-NMR spectra were recorded on a Bruker Ascend 400 spectrometer (400 MHz) fitted with a sample robot and an auto-shimming function. NMR samples were prepared at 10 mg/mL in DMSO-D6, which were dissolved at 60 °C for up to 3 days. 0.5-0.7 mL of the samples were added to glass NMR tubes. The signal of the deuterated solvent was used as reference signal (2.50 ppm) and the identified NMR peak integrals were normalized to the number of representing protons. Peaks were assigned by analysis of gradient-enhanced 2D COSY NMR (COSYGPSW), $^{13}$C-NMR and $^{13}$C-DEPT-135 NMR. All $^1$H-NMR and $^{13}$C-NMR spectra were recorded at 128 and 1024 scans, respectively.

To determine the saponification degree, the normalized integral values of the methyl proton peaks arising from the acetate group (multiplet, 1.90-2.00 ppm) were compared to the normalized integral values of the methylene group peaks arising from the polymer backbone (multiple peaks, 0.95-1.72 ppm).

To determine the butene-3,4-diol content the normalized integral values of the methine protons in the polymer backbone arising from the incorporated butene-3,4-diol (singlet, 3.47 ppm) were compared to the integral values of either the methine protons arising from the polymer backbone (multiplet, 3.58-3.99 ppm) or the methylene proton peaks arising from the polymer backbone (multiplet, 1.90-2.00 ppm).

DSC method

DSC thermograms were recorded on a Mettler Toledo DSC3 differential scanning calorimeter. Of the samples 5-10 mg was weighed in 40 μL aluminium crucibles (supplied by Mettler Toledo), sealed with punctured aluminium lids and measured with an empty sealed 40 μL aluminium crucible as reference. The used temperature program consisted of an endotherm from 25 to 250 °C, an isotherm of 1 minute, an exotherm from 250 to 25 °C, an isotherm of 1 minute and an endotherm from 25 to 250 °C. All measurements were performed under a nitrogen (Alphagaz 1, Air Liquide) flow of 50 mL/minute and cooling/heating rates of 10 °C/minute.

2 Results

2.1 Curing

Cured material was obtained had a slightly darker appearance. The dimensions of the material remained unchanged

2.2 Melt rheology

Since polymer structure is closely related to the rheological properties of a polymer, oscillatory dynamic mechanical analysis in the melt was chosen to analyze the effect of curing BVOH in vacuum. The loss and storage moduli (G' and G", respectively) of uncured BVOH and BVOH exposed to 200°C for 1 hour in vacuum differ significantly (Figure 1A and 1B). The crossover modulus frequency (the angular frequency where G' = G") identifies the frequency where plastic deformation (G") becomes dominant over elastic deformation (G'). Since in branched and crosslinked systems the polymer chain mobility is restricted and cannot comply with high frequency motion, the crossover modulus frequency is shifted to lower frequencies [1]. Uncured BVOH shows a crossover modulus frequency around 1 rad/s (Figure 1A), whereas Figure 1B show that the storage and loss shear modulus of the cured BVOH closely resemble one another and a clear crossover point cannot be identified.

However, when comparing the complex viscosities of uncured BVOH and BVOH cured for 1 h in Figure 2, the complex viscosity is increased after curing BVOH. Furthermore, the storage shear modulus of cured BVOH is larger than the storage shear modulus of uncured BVOH over the whole tested frequency range (Figure 3A). These observations show that cured BVOH has reduced melt flow and an enhanced elasticity, which both indicate some degree of crosslinking. Besides the storage shear modulus, the loss shear modulus of cured BVOH is also increased compared to uncured BVOH (Figure 3B), which leads to an increased complex modulus of cured BVOH and leads to a larger shear modulus, which is also indicative of existing crosslinks within the material. This results in a higher melt viscosity as well as an increased shear modulus upon curing BVOH for 1 hour under vacuum at 200°C.

2.3 Determination of heat stability

Printing of the cured and uncured material showed a slightly better heat stability of the cured material as can be seen in Figure 4. This can be seen at a nozzle temperature of 225°C, where the cured material showed no flowing near the build plate of the printer. At 230°C both materials exhibited flowing during printing. However, the uncured structure lost its structural integrity. This data is supported by the complex shearing viscosities

shown in Figure 2.

2.4 Solubility of the printed materials

Of the structures printed with a nozzle temperature of 230°C a piece was dissolved in tap water. Both samples were fully dissolved and no residue was detected.

[1] Ye, Z.B.; Al Obaidi, F.; Zu, S.P. Macromol. Chem. Phys. 2004, 205, 897

## Claims

1. Use of a copolymer containing

   a. 90-99.5 mol% monomer units A
   b. 0.5-10 mol% monomer units B, wherein monomer unit A is

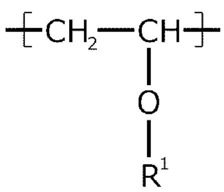

   wherein monomer unit B is

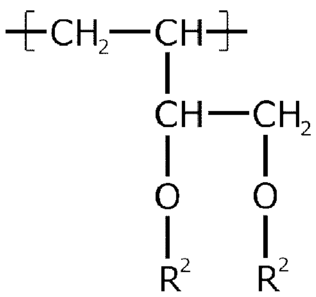

   wherein $R^1$ is H or a $C_1$-$C_{10}$ alkylcarbonyl group,
   wherein $R^2$ is H or a $C_1$-$C_{10}$ alkylcarbonyl group,
   wherein at least 90 mol% of $R^1$ and $R^2$ are H (according to $^1$H-NMR),
   wherein the melt flow rate (MFR (2.16 kg at 230 °C)) of the copolymer is between 1-100 g/10 min as measured according to ISO1133,
   wherein the copolymer is used as water soluble support material for additive manufacturing, and wherein the mol% are determined relative to the total amount of monomer units of the copolymer.

2. Use according to claim 1, wherein the copolymer is partly branched having G'> G" at angular frequencies of 0.1 and 10 rad/s, wherein G' is the storage shear modulus of the copolymer and G" is the loss shear modulus of the copolymer.

3. Use according to claim 1 or claim 2, wherein monomer unit A is a vinylacetate group or a vinylalcohol group, and wherein at least 90 mol% of $R^1$ is H, more preferably at least 98 mol% of $R^1$ is H, more preferably at least 99 mol% of $R^1$ is H, most preferably at least 99.5 mol% of $R^1$ is H.

4. Use according to any one of claims 1-3, wherein monomer unit B is preferably a 1,2-butenyl-3,4-diacetyl or 1,2-butenyl-3,4-dihydroxy group, and wherein at least 90 mol% of $R^2$ is H, more preferably at least 98 mol% of $R^2$ is H, more preferably at least 99 mol% of $R^2$ is H, most preferably at least 99.5 mol% of $R^2$ is H.

5. Use according to any one of claims 1-4, wherein the copolymer has a complex viscosity at 0.1 rad/s between 20 and 50 kPa.s and between 0.5 and 5 kPa.s at 10 rad/s, as measured on an Anton Paar UDS200 rheometer fitted with a MP306 spindle and a TEK350 plate, with a gap of 1 mm, at a temperature of 220 °C.

6. Use according to any one of claims 1-5, wherein the copolymer has between 96 and 99 mol% of monomer units A and between 1 and 4 mol% monomer units B.

7. Use according to any one of claims 1-6, wherein the additive manufacturing method is fused deposition modeling (FDM), and wherein the copolymer is used in the additive manufacturing of high temperature materials selected from PEEK, PEI, Polyphtalamide, Polyphenylene sulfone, Polyether sulfone, Polysulfone, Polytetrafluorethylene, Polyamide imide and Polybenzoimidazole.

8. Use according to anyo one of claims 1-7, wherein the copolymer can be used at operating temperatures between 200 and 235 °C, more preferably between 205 and 235 °C.

9. Use according to any one of claims 1-8, wherein the copolymer can make a support structure which is stable under the high temperature conditions and can be removed by dissolution in water at a temperature between 20 and 80 °C.

10. Branched copolymer containing

   a. 90-99.5 mol% monomer units A
   b. 0.5-10 mol% monomer units B,

   wherein monomer unit A is

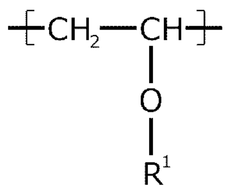

wherein monomer unit B is

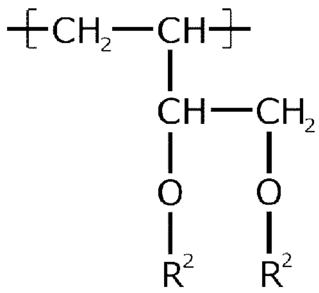

,

wherein $R^1$ is H or a $C_1$-$C_{10}$ alkylcarbonyl group, wherein $R^2$ is H or a $C_1$-$C_{10}$ alkylcarbonyl group, wherein the branched copolymer has a storage shear modulus G' and a loss hear modulus G", wherein G' and G" are at least 10 kPa at angular frequencies of 0.1 rad/s,
wherein G' and G" are at least 80 kPa at an angular frequency of 10 rad/s, and
wherein the G' and G" are determined on an Anton Paar UDS200 rheometer fitted with a MP306 spindle and a TEK350 plate, with a gap of 1 mm, at a temperature of 220 °C.

**11.** Branched copolymer according to claim 10, wherein the storage shear modulus G' is between 12-30 kPa at an angular frequency of 0.1 rad/s, and between 100-200 kPa at an angular frequency of 10 rad/s.

**12.** Branched copolymer according to claim 10 or 11, wherein the copolymer has a complex viscosity at 0.1 rad/s between 100 and 300 kPa.s and between 10 and 40 kPa.s at 10 rad/s, as measured on an Anton Paar UDS200 rheometer fitted with a MP306 spindle and a TEK350 plate, with a gap of 1 mm, at a temperature of 220 °C.

**13.** Branched copolymer according to any one of claims 10-12, wherein $R^1$ is either H or an acetyl group and wherein at least 90 mol% of $R^1$ is H, more preferably at least 98 mol% of $R^1$ is H, more preferably at least 99 mol% of $R^1$ is H, most preferably at least 99.5 mol% of $R^1$ is H.

**14.** Branched copolymer according to any one of claims 10-13, wherein, monomer unit B is preferably a 1,2-butenyl-3,4-diacetyl or 1,2-butenyl-3,4-dihydroxy group and wherein at least 90 mol% of $R^2$ is H, more preferably at least 98 mol% of $R^2$ is H, more preferably at least 99 mol% of $R^2$ is H, most preferably at least 99.5 mol% of $R^2$ is H.

**15.** Branched copolymer according to any one of claims 10-14, wherein the branched copolymer has between 96 and 99 mol% of monomer units A and between 1 and 4 mol% monomer units B.

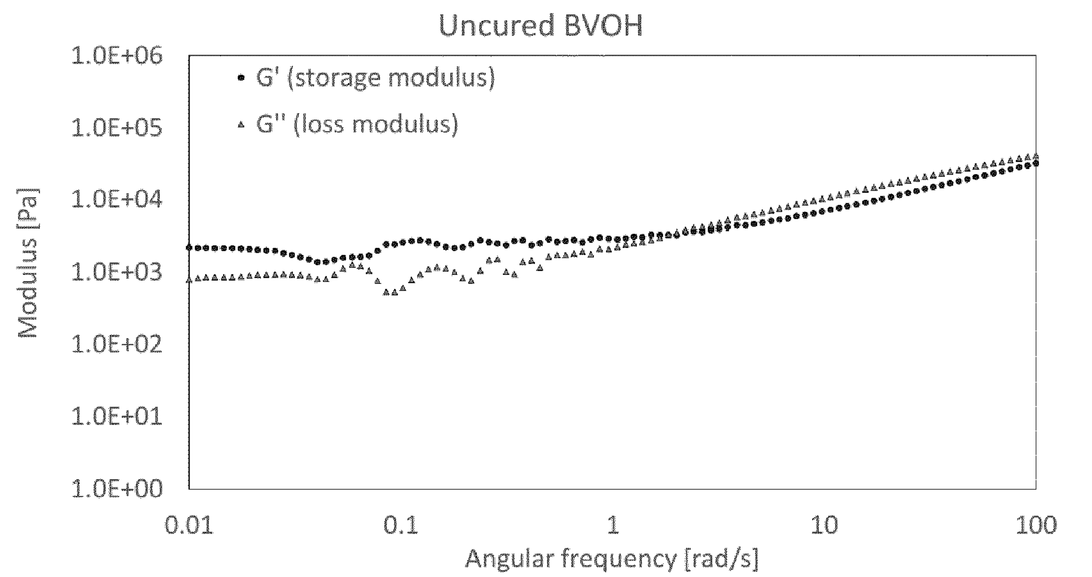


Figure 1A

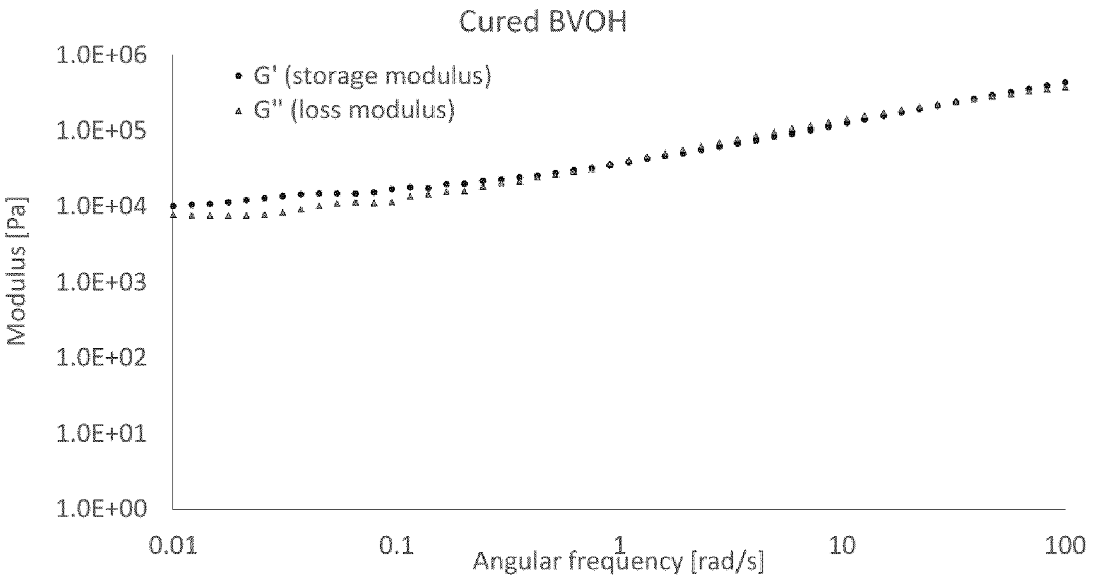


Figure 1B

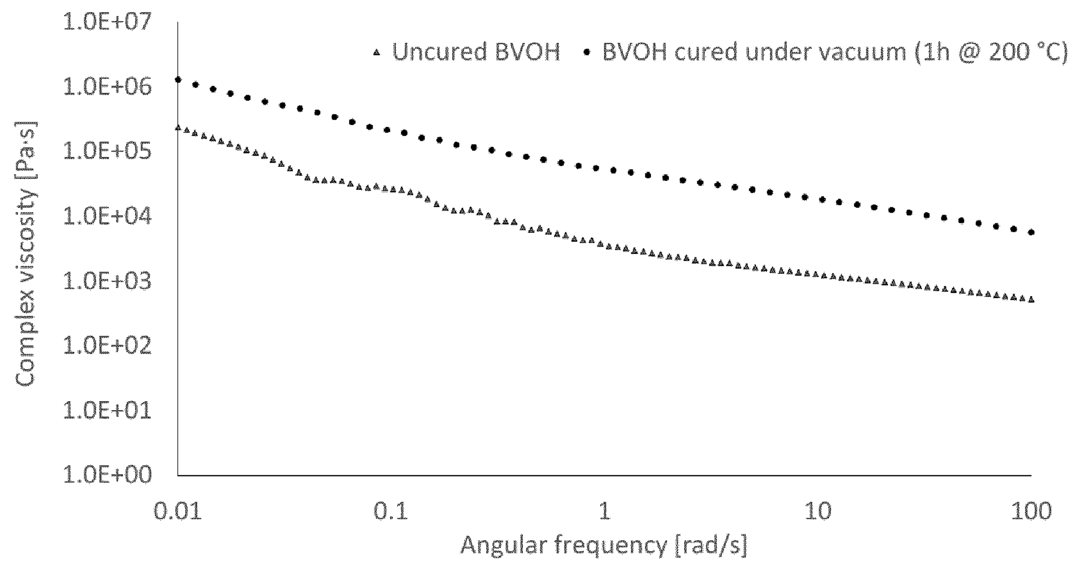


Figure 2

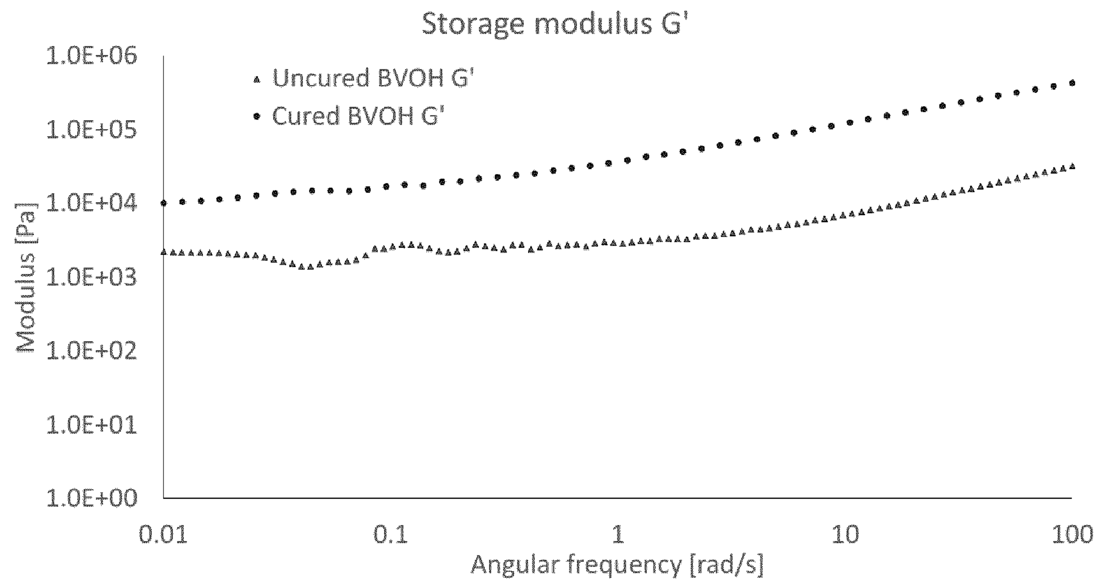


Figure 3A

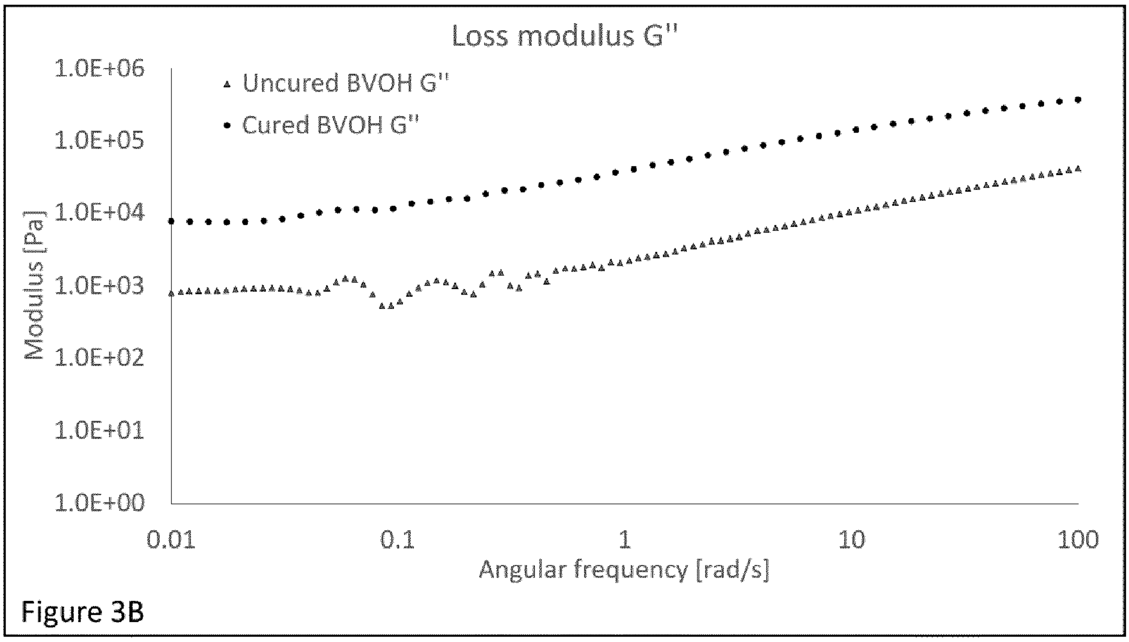


Figure 3B

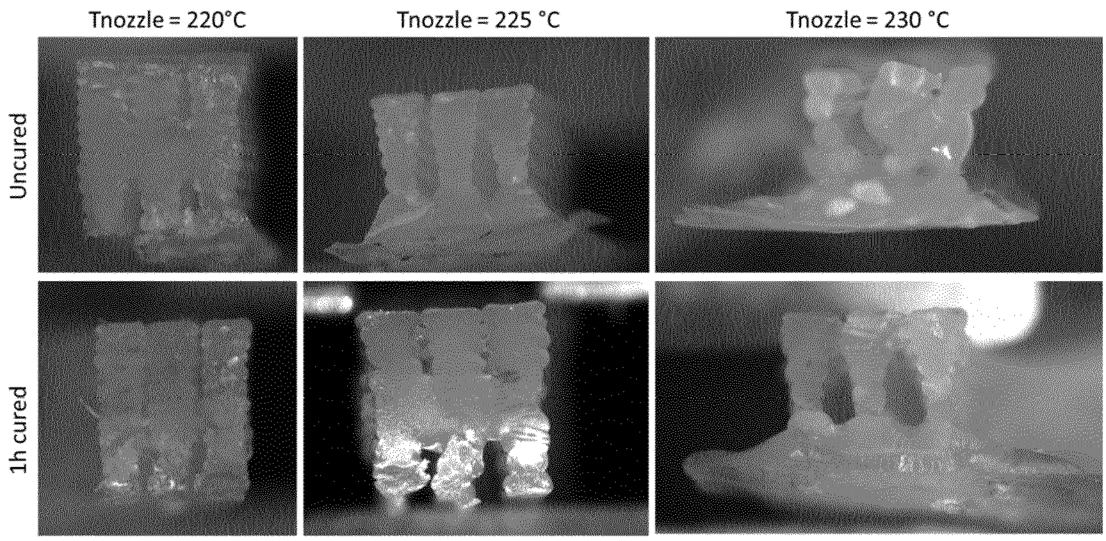


Figure 4

Europäisches Patentamt
European Patent Office
Office européen des brevets

# EUROPEAN SEARCH REPORT

Application Number
EP 19 15 6861

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 150 362 A1 (NIPPON SYNTHETIC CHEMICAL IND CO LTD [JP]) 5 April 2017 (2017-04-05)<br>* example 1 *<br>* paragraph [0059] *<br>* paragraph [0031] *<br>----- | 1-4 | INV.<br>B33Y70/00<br>B29C64/40<br>C08F216/06<br>C08F218/08 |
| Y | Verbatim: "BVOH Filament",<br>,<br>16 February 2018 (2018-02-16), XP55595736,<br>Retrieved from the Internet:<br>URL:https://www.verbatim-marcom.com/image_Verbatim-55901_BVOH-Datasheet-2018_401070.pdf<br>[retrieved on 2019-06-12] | 1-9 | |
| A | * the whole document *<br>----- | 10-15 | |
| Y | Nichigo: "Nichigo G-Polymer TM series Butenediol Modified PVOH",<br>,<br>31 August 2017 (2017-08-31), XP55596111,<br>Retrieved from the Internet:<br>URL:http://www.chembuyersguide.com/images/SOARNOL28.pdf<br>[retrieved on 2019-06-13]<br>* Pellet type: Heat resistance; page 2 *<br>----- | 1-9 | TECHNICAL FIELDS SEARCHED (IPC)<br>B33Y<br>B29C<br>C08F |
| A | JP 2017 094599 A (NIPPON SYNTHETIC CHEM IND CO LTD:THE) 1 June 2017 (2017-06-01)<br>* paragraph [0077] *<br>* paragraph [0079] *<br>* example 2 *<br>* paragraph [0089] *<br>----- | 1-15 | |
| A | US 2012/157627 A1 (SHIBUTANI MITSUO [JP] ET AL) 21 June 2012 (2012-06-21)<br>* Examples *<br>----- | 1-15 | |

The present search report has been drawn up for all claims

1

| Place of search | Date of completion of the search | Examiner |
|---|---|---|
| The Hague | 13 June 2019 | Fischer, Brigitte |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

Application Number
EP 19 15 6861

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches Patentamt
European Patent Office
Office européen des brevets

# LACK OF UNITY OF INVENTION SHEET B

Application Number
EP 19 15 6861

The Search Division considers that the present European patent application does not comply with the requirements of unity of invention and relates to several inventions or groups of inventions, namely:

## ANNEX TO THE EUROPEAN SEARCH REPORT ON EUROPEAN PATENT APPLICATION NO. EP 19 15 6861

This annex lists the patent family members relating to the patent documents cited in the above-mentioned European search report. The members are as contained in the European Patent Office EDP file on
The European Patent Office is in no way liable for these particulars which are merely given for the purpose of information.

13-06-2019

| Patent document cited in search report | Publication date | Patent family member(s) | Publication date |
|---|---|---|---|
| EP 3150362 A1 | 05-04-2017 | CN 106457688 A | 22-02-2017 |
| | | EP 3150362 A1 | 05-04-2017 |
| | | JP 6469570 B2 | 13-02-2019 |
| | | JP WO2015182681 A1 | 20-04-2017 |
| | | US 2017087775 A1 | 30-03-2017 |
| | | WO 2015182681 A1 | 03-12-2015 |
| JP 2017094599 A | 01-06-2017 | NONE | |
| US 2012157627 A1 | 21-06-2012 | JP 5545652 B2 | 09-07-2014 |
| | | JP 2011074364 A | 14-04-2011 |
| | | US 2012157627 A1 | 21-06-2012 |
| | | WO 2011027677 A1 | 10-03-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017112689 A
- US 8772782 B
- US 8722782 B


### Non-patent literature cited in the description


- **YE, Z.B. ; AL OBAIDI, F. ; ZU, S.P.** *Macromol. Chem. Phys.,* 2004, vol. 205, 897